# EUROPEAN PATENT SPECIFICATION

(11) **EP 3 592 457 B1**
(45) Date of publication and mention of the grant of the patent: **03.07.2024**
(21) Application number: 18764676.5
(22) Date of filing: 05.03.2018
(51) Int. Cl.: F01N 3/10, B01J 23/00, B01J 23/42, B01J 23/89, B01J 35/00, B01J 35/30, B01J 37/02

(54) **CATALYST COMBINING PLATINUM GROUP METAL WITH COPPER-ALUMINA SPINEL**
KATALYSATOR MIT EINER KOMBINATION AUS PLATINGRUPPENMETALL UND KUPFER-ALUMINIUMOXID-SPINELL
CATALYSEUR COMBINANT UN MÉTAL DU GROUPE DU PLATINE AVEC UN SPINELLE CUIVRE-ALUMINE

(30) Priority: 06.03.2017 US 201762467573 P
(43) Date of publication of application: 15.01.2020
(73) Proprietor: BASF Corporation, Florham Park, NJ 07932 (US)
(72) Inventor: ILINICH, Oleg, Monmouth Junction, New Jersey 08852 (US); HOKE, Jeffrey B., North Brunswick, New Jersey 08902 (US)
(74) Representative: Altmann Stößel Dick Patentanwälte PartG mbB
(86) International application number: PCT/IB2018/051409
(87) International publication number: WO 2018/163052

(56) References cited:
- EP-A1- 0 042 471
- EP-A1- 0 779 095
- US-A- 3 397 154
- US-A- 4 631 266
- US-A- 5 763 353
- US-A1- 2002 122 764
- US-A1- 2004 082 471
- US-A1- 2004 105 804
- GÓMEZ LETICIA E ET AL: "Preferential CO oxidation on Pt-Cu/Al2O3catalysts with low Pt load", INTERNATIONAL JOURNAL OF HYDROGEN ENERGY, ELSEVIER, AMSTERDAM, NL, vol. 39, no. 8, 1 February 2014 (2014-02-01), pages 3719-3729, XP028614438, ISSN: 0360-3199, DOI: 10.1016/J.IJHYDENE.2013.12.146

## Description

### FIELD OF THE INVENTION

The present invention relates to an oxidation catalyst composition, catalyst articles coated with such a composition, , and a method of preparing such a composition.

### BACKGROUND OF THE INVENTION

Emissions of diesel engines include particulate matter (PM), nitrogen oxides (NOₓ), unburned hydrocarbons (HC), and carbon monoxide (CO). NOₓ is a term used to describe various chemical species of nitrogen oxides, including nitrogen monoxide (NO) and nitrogen dioxide (NO₂), among others. The two major components of exhaust particulate matter are the soluble organic fraction (SOF) and the soot fraction. The SOF condenses on the soot in layers, and is generally derived from unburned diesel fuel and lubricating oils. The SOF can exist in diesel exhaust either as a vapor or as an aerosol (i.e., fine droplets of liquid condensate), depending on the temperature of the exhaust gas. Soot is predominately composed of particles of carbon.

Oxidation catalysts comprising a precious metal, such as platinum group metals (PGM), dispersed on a refractory metal oxide support, such as alumina, are known for use in treating the exhaust of diesel engines in order to convert both hydrocarbon and carbon monoxide gaseous pollutants by catalyzing the oxidation of these pollutants to carbon dioxide and water. Such catalysts have been generally contained in units called diesel oxidation catalysts (DOC), which are placed in the exhaust flow path from diesel power systems to treat the exhaust before it vents to the atmosphere. Typically, the diesel oxidation catalysts are formed on ceramic or metallic substrates upon which one or more catalyst coating compositions are deposited. In addition to the conversion of gaseous HC and CO emissions and particulate matter (SOF portion), oxidation catalysts that contain PGM promote the oxidation of NO to NO₂. Catalysts are typically defined by their light-off temperature or the temperature at which 50% conversion is attained, also called T₅₀.

Platinum (Pt) remains the most effective platinum group metal for oxidizing CO and HC in a DOC. However, after high temperature aging under lean conditions there can be an advantage to adding Pd to a Pt-based DOC, because Pd stabilizes Pt against sintering at the high temperature. One of the other major advantages of using palladium (Pd) based catalysts is the lower cost of Pd compared to Pt. However, Pd- based DOCs, without Pt, typically show higher light-off temperatures for oxidation of CO and HC, especially when used with HC storage materials, potentially causing a delay in HC and or CO light-off. For this reason, care must be taken to design the catalyst to maximize positive interactions while minimizing negative interactions.

Diesel engines utilizing advanced combustion technologies are able to reduce NOₓ and PM emissions by reducing the combustion flame temperature within the engine cylinder and by increasing the uniformity and mixing of the fuel charge prior to ignition. However, in the process of changing the combustion process to lower NOₓ and PM emissions, the overall quantity of CO and HC emissions can increase, the nature of the hydrocarbons formed can change, and the exhaust temperature may be lowered. In some instances, the CO and HC emissions from advanced combustion diesel engines is 50% to about 100% higher than the HC and CO emissions from traditional diesel engines. These trends have driven the need for lower DOC light-off temperatures to manage CO and HC emissions. This in turn has further increased the use of DOCs with high PGM loadings, with an associated increase in the cost of the DOC.

Since these exhaust characteristics will create significant challenges for current diesel emission catalyst technology, there remains a need in the art for new catalyst formulations that meet increasingly stringent environmental regulations.

EP 0 779 095 A discloses an oxidation catalyst composition comprising at least one platinum group metal impregnated onto a porous alumina material, wherein the porous alumina material comprises copper-alumina spinel phase.

EP 0 042 471 A1 discloses a catalyst comprising aluminum oxide and copper oxide where at least 60 wt % of this oxide mixture consists of a copper oxide, aluminum oxide compound having a spinel structure, and wherein 60 to 100% of the copper present is bound to aluminum oxide as copper oxide, aluminum oxide-spinel. The atomic ratio Cu:Al is 0.25 to 0.50 in the spinel structure. The catalyst contains zinc oxide present in the pores of the spinel in an amount of 1 to 20 per cent by weight calculated as zinc oxide. The catalyst possibly contains further amounts of zinc oxide which is admixed mechanically or is present as a coating on the catalyst.

L.E. Gomez et al., "Preferential CO oxidation on PT-Cu/Al2O3 catalysts with low Pt loadings", International Journal of Hydrogen Energy 39 (2014), p. 3719-3729, relates to an oxidation catalyst composition comprising at least one platinum group metal impregnated onto a porous alumina material, wherein the porous alumina material comprises defective CuAl₂O₄-like species.

### SUMMARY OF THE INVENTION

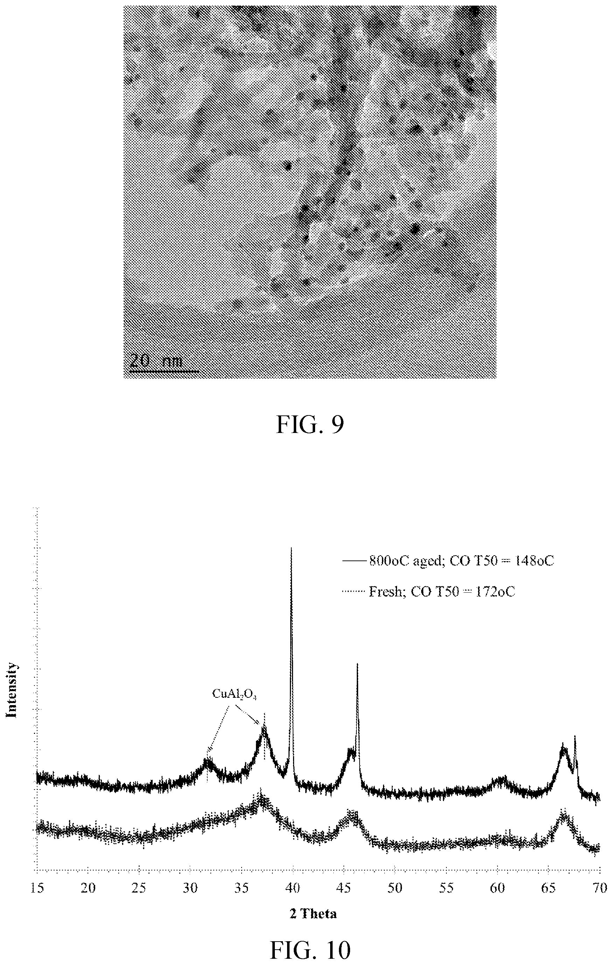

The invention provides an oxidation catalyst composition comprising at least one platinum group metal impregnated onto a porous alumina material, wherein the porous alumina material comprises a copper- alumina spinel phase, wherein at least one portion of the copper-alumina spinel phase is proximal to, or in direct contact with, one or more of the following: at least one platinum group metal crystallite; at least one platinum group metal crystallite having a crystallite size of about 1 nm or greater; at least one platinum group metal crystallite having a crystallite size of about 50 nm or greater; characterized in that the concentration of at least one platinum group metal is about 1 wt.% to about 6 wt.% relative to the weight of the porous alumina material. Without being bound by theory of operation, it is believed that the copper-alumina spinel works synergistically with the platinum group metal to enhance CO oxidation activity, and this synergistic activity is apparent despite the presence of relatively large platinum group metal crystallites. The presence of the copper-alumina spinel can be confirmed by visual inspection of microscopic images of the catalyst material (e.g., transmission electron microscope (TEM) images) or by X-ray powder diffraction (XRD) analysis. For example, in one embodiment, the oxidation catalyst composition of the invention is characterized by X-ray powder diffraction interplanar spacing peaks comprising a peak between about 30 and about 35 degrees 2Θ and a peak between about 35 degrees and about 40 degrees 2Θ (e.g., FIGS. 10-12).

In certain embodiments, at least one portion of the copper-alumina spinel phase within the catalyst composition is proximal to (or in direct contact with) at least one platinum group metal crystallite having a crystallite size of at least about 50 nm. For example, at least one portion of the copper-alumina spinel phase can be found within about 50 nm of at least one platinum group metal crystallite having a crystallite size of about 50 nm or greater.

In other embodiments, at least one portion of the copper-alumina spinel phase within the catalyst composition is proximal to or in direct contact with at least one platinum group metal crystallite having a crystallite size of about 1 nm or greater. For example, at least one portion of the copper-alumina spinel phase can be found within about 50 nm of at least one platinum group metal crystallite having a crystallite size of about 1 nm or greater.

The alumina material of the catalyst composition is predominantly alumina, but can contain, for example, copper (calculated as copper oxide) in an amount of about 1 to about 40% by weight, based on the total weight of the alumina material. Any PGM can be used, with certain embodiments of the invention utilizing platinum, palladium, or a combination thereof. PGM concentrations include about 1 wt.% to about 6 wt.% relative to the weight of the porous alumina material. In certain embodiments, the oxidation catalyst composition provides a T₅₀ for CO oxidation that is lower than the T₅₀ for CO oxidation of a comparable oxidation catalyst composition containing the same amount of platinum group metal impregnated on alumina devoid of copper.

In another aspect, the oxidation catalyst composition of the invention can be described as a composition comprising at least one platinum group metal impregnated onto a porous alumina material comprising predominantly alumina mixed with copper oxide, wherein the catalyst composition produces a copper-alumina spinel phase upon thermal aging for 20 hours at a temperature of 800°C in air with 10% by volume steam. Depending on the specific PGM precursor used in the catalyst preparation, such a composition may even exhibit a T₅₀ for CO oxidation that is lower after said thermal aging (compared to the pre-aging catalyst composition). A similar effect, i.e., increase in CO oxidation activity or decrease in T₅₀ for CO oxidation relative to the pre-aging characteristics, can be achieved upon high temperature aging in ambient air without adding steam to it.

In another aspect, the invention provides a catalyst article, comprising a catalyst substrate having a plurality of channels adapted for gas flow, the catalyst substrate having a catalyst coating disposed thereon, wherein the catalyst coating comprises the oxidation catalyst composition of any of the embodiments set forth herein. In certain embodiments, the catalyst substrate is a catalyzed soot filter. The oxidation catalyst composition can also be part of a multi-layer catalyst composition or zone-coated on the catalyst substrate. In one embodiment, the oxidation catalyst composition is disposed in a first layer on the catalyst substrate, and the catalyst article further comprises a second layer comprising at least one platinum group metal impregnated on a refractory metal oxide support optionally in combination with a zeolite. In another embodiment, the catalyst article comprises an inlet zone proximal to an inlet face of the catalyst article and an outlet zone proximal to an outlet face of the catalyst article, wherein the oxidation catalyst composition is disposed only in either the inlet zone or the outlet zone.

Still further, the invention provides a method of preparing an oxidation catalyst composition comprising a copper-alumina spinel phase. The method comprises the steps of receiving a porous alumina material comprising predominantly alumina mixed with copper oxide; impregnating the porous alumina material with one or more water soluble salts of a platinum group metal; drying and calcining the porous alumina material after said impregnating step to form a catalyst composition; and thermally treating the porous alumina material to form a copper-alumina spinel phase either before or after said impregnating step; wherein said thermally treating step causes sintering of platinum group metal crystallites such that at least one portion of the copper-alumina spinel phase is proximal to, or in direct contact with, at least one platinum group metal crystallite having a crystallite size of about 1 nm or greater; and optionally, the at least one portion of the copper-alumina spinel phase is within about 50 nm of the at least one platinum group metal crystallite; and wherein the concentration of at least one platinum group metal is about 1 wt.% to about 6 wt.% relative to the weight of the porous alumina material upon which the platinum group metal is impregnated. In one example, the step of thermally treating the catalyst composition comprises heating the catalyst composition at a temperature of at least 600°C in an oxidizing environment (e.g., air and optionally steam).

The timing of the thermal treatment step utilized to form the copper-alumina spinel can vary. For example, in one embodiment, the method includes receiving a porous alumina material comprising predominantly alumina mixed with copper oxide; impregnating the porous alumina material with one or more water soluble salts of a platinum group metal; drying and calcining the porous alumina material to form a catalyst composition; and thermally treating the catalyst composition to form a treated catalyst composition comprising a copper-alumina spinel phase. Thus, the thermal treatment step is conducted after the PGM impregnation step.

Alternatively, the method could be practiced by conducting the thermal treatment step to form the spinel prior to the PGM impregnation of the alumina support. For example, such an embodiment could include receiving a porous alumina material comprising predominantly alumina mixed with copper oxide; thermally treating (as described above) the porous alumina material comprising predominantly alumina mixed with copper oxide to form a treated porous material comprising a copper-alumina spinel phase; impregnating the treated porous material with one or more water soluble salts of a platinum group metal; and drying and calcining the treated porous material to form a catalyst composition.

The method can further include forming a washcoat slurry of the catalyst composition; coating the washcoat slurry onto a catalyst substrate comprising a plurality of channels adapted for gas flow, and calcining the resulting catalyst article. The thermal treatment step to form the spinel could even occur after such a washcoating process, meaning the thermal treatment step is conducted on the coated substrate. For example, in one such embodiment, the porous alumina material mixed with copper oxide is impregnated with one or more water soluble salts of a platinum group metal, dried and calcined to form a catalyst composition that is further formed into a washcoat slurry, coated onto a catalyst substrate comprising a plurality of channels adapted for gas flow, and calcined to form the catalyst article. The calcined catalyst article is then further thermally treated (as described above) to form a treated catalyst article comprising a copper-alumina spinel phase.

Note that the porous alumina material comprising predominantly alumina mixed with copper oxide can be formed using various techniques. For example, alumina materials suitable for use in the invention can be formed by either co-precipitating a mixture of a soluble aluminum salt and a soluble copper salt to form an intimately-mixed composite material that is suitable for use in the invention, or by impregnating a copper salt onto an alumina support using an incipient wetness technique.

The invention includes, without limitation, the following embodiments.
Embodiment 1: An oxidation catalyst composition, the composition comprising at least one platinum group metal impregnated onto a porous alumina material, wherein the porous alumina material comprises a copper- alumina spinel phase,
   wherein at least one portion of the copper-alumina spinel phase is proximal to, or in direct contact with, one or more of the following:
   at least one platinum group metal crystallite;
   at least one platinum group metal crystallite having a crystallite size of about 1 nm or greater;
   at least one platinum group metal crystallite having a crystallite size of about 50 nm or greater; characterized in that
   the concentration of at least one platinum group metal is about 1 wt.% to about 6 wt.% relative to the weight of the porous alumina material.
Embodiment 2: The oxidation catalyst composition of any preceding embodiment, wherein the at least one portion of the copper-alumina spinel phase is within about 50 nm of the at least one platinum group metal crystallite.
Embodiment 3: The oxidation catalyst composition of any preceding embodiment, wherein the porous alumina material comprises copper, calculated as copper oxide, in an amount of about 1 to about 40% by weight, based on the total weight of the porous alumina material.
Embodiment 4: The oxidation catalyst composition of any preceding embodiment, wherein the platinum group metal is platinum, palladium, or a combination thereof.
Embodiment 5: The oxidation catalyst composition of any preceding embodiment, wherein the T₅₀ for CO oxidation of the oxidation catalyst composition is lower than the T₅₀ for CO oxidation of a comparable oxidation catalyst composition containing the same amount of platinum group metal impregnated on alumina devoid of copper.
Embodiment 6: The oxidation catalyst composition of any preceding embodiment, wherein the oxidation catalyst composition is characterized by X-ray powder diffraction interplanar spacing peaks comprising a peak between about 30 and about 35 degrees 2Θ and a peak between about 35 degrees and about 40 degrees 2Θ.
Embodiment 7: A catalyst article, comprising a catalyst substrate having a plurality of channels adapted for gas flow, the catalyst substrate having a catalyst coating disposed thereon, wherein the catalyst coating comprises the oxidation catalyst composition of any preceding embodiment. Embodiment 8: The catalyst article of any preceding embodiment, wherein the catalyst substrate is a catalyzed soot filter.
Embodiment 9: The catalyst article of any preceding embodiment, wherein the oxidation catalyst composition is disposed in a first layer on the catalyst substrate, and wherein the catalyst article further comprises a second layer comprising at least one platinum group metal impregnated on a refractory metal oxide support optionally in combination with a zeolite.
Embodiment 10: The catalyst article of any preceding embodiment, wherein the catalyst article comprises an inlet zone proximal to an inlet face of the catalyst article and an outlet zone proximal to an outlet face of the catalyst article, wherein the oxidation catalyst composition is disposed only in either the inlet zone or the outlet zone.
Embodiment 11: A method of preparing an oxidation catalyst composition comprising a copper-alumina spinel phase, comprising:
   receiving a porous alumina material comprising predominantly alumina mixed with copper oxide;
   impregnating the porous alumina material with one or more water soluble salts of a platinum group metal;
   drying and calcining the porous alumina material after said impregnating step to form a catalyst composition; and
   thermally treating the porous alumina material to form a copper-alumina spinel phase either before or after said impregnating step,
   wherein said thermally treating step causes sintering of platinum group metal crystallites such that at least one portion of the copper-alumina spinel phase is proximal to, or in direct contact with, at least one platinum group metal crystallite having a crystallite size of about 1 nm or greater; and optionally, the at least one portion of the copper-alumina spinel phase is within about 50 nm of the at least one platinum group metal crystallite; and
   wherein the concentration of at least one platinum group metal is about 1 wt.% to about 6 wt.% relative to the weight of the porous alumina material upon which the platinum group metal is impregnated.
Embodiment 12: The method of any preceding embodiment, further comprising forming a washcoat slurry of the catalyst composition; coating the washcoat slurry onto a catalyst substrate comprising a plurality of channels adapted for gas flow to form a catalyst article, and calcining the catalyst article, wherein said thermally treating step comprises thermally treating the resulting catalyst article to form the copper-alumina spinel phase. Embodiment 22: The method of any preceding embodiment, wherein the concentration of at least one platinum group metal is about 0.1 wt.% to about 10 wt.% relative to the weight of the porous alumina material upon which the platinum group metal is impregnated.
Embodiment 13: The method of any preceding embodiment, wherein the porous alumina material comprises copper oxide in an amount of about 1 to about 40% by weight, based on the total weight of the porous alumina material.
Embodiment 14: The method of any preceding embodiment, wherein the platinum group metal comprises platinum, palladium, or a combination thereof.
Embodiment 15: The method of any preceding embodiment, wherein said thermally treating step causes sintering of platinum group metal crystallites such that at least one portion of the copper-alumina spinel phase is proximal to, or in direct contact with, at least one platinum group metal crystallite having a crystallite size of about 1 nm or greater.
Embodiment 16: The method of any preceding embodiment, wherein the at least one portion of the copper- alumina spinel phase is within about 50 nm of the at least one platinum group metal crystallite.
Embodiment 17: The method of any preceding embodiment, wherein the step of thermally treating the catalyst composition comprises heating the catalyst composition at a temperature of at least 600°C in an oxidizing environment.
Embodiment 18: The method of any preceding embodiment, wherein the porous alumina material comprising predominantly alumina mixed with copper oxide is formed by a method comprising either co- precipitating a mixture of a soluble aluminum salt and a soluble copper salt or impregnating a copper salt onto an alumina support.

These and other features, aspects, and advantages of the disclosure will be apparent from a reading of the following detailed description together with the accompanying drawings, which are briefly described below. The invention includes any combination of two, three, four, or more of the above-noted embodiments as well as combinations of any two, three, four, or more features or elements set forth in this disclosure, regardless of whether such features or elements are expressly combined in a specific embodiment description herein. This disclosure is intended to be read holistically such that any separable features or elements of the disclosed invention, in any of its various aspects and embodiments, should be viewed as intended to be combinable unless the context clearly dictates otherwise. Other aspects and advantages of the present invention will become apparent from the following.

### BRIEF DESCRIPTION OF THE DRAWINGS

In order to provide an understanding of embodiments of the invention, reference is made to the appended drawings, which are not necessarily drawn to scale, and in which reference numerals refer to components of exemplary embodiments of the invention. The drawings are exemplary only, and should not be construed as limiting the invention.
FIG. 1 is a perspective view of a honeycomb-type substrate carrier which may comprise a diesel oxidation catalyst (DOC) washcoat composition in accordance with the present invention;
FIG. 2 is a partial cross-sectional view enlarged relative to FIG. 1 and taken along a plane parallel to the end faces of the substrate carrier of FIG. 1, which shows an enlarged view of a plurality of the gas flow passages shown in FIG. 1;
FIG. 3 shows a schematic depiction of an embodiment of an emission treatment system in which a DOC of the present invention is utilized;
FIGS. 4A and 4B are transmission electron microscope (TEM) images of Inventive Sample 1 before and after aging as described in the Experimental;
FIGS. 5 A and 5B are TEM images of Comparative Sample 2 before and after aging as described in the Experimental;
FIG. 6 is a TEM image of Inventive Sample 4 after aging as described in the Experimental;
FIG. 7 is a TEM image of the Inventive Sample 6 after aging as described in the Experimental; FIG. 8 is a TEM image of the Inventive Sample 7 before aging as described in the Experimental; FIG. 9 is a TEM image of Comparative Sample 8 before aging as described in the Experimental; FIG. 10 is an X-ray powder diffraction (XRD) plot for Sample 1 before and after aging as described in the Experimental;
FIG. 11 is an X-ray powder diffraction (XRD) plot for Sample 4 before and after aging as described in the Experimental; and
FIG. 12 is an X-ray powder diffraction (XRD) plot for Sample 6 before and after aging as described in the Experimental.

### DETAILED DESCRIPTION

The present invention now will be described more fully hereinafter. This invention may, however, be embodied in many different forms and should not be construed as limited to the embodiments set forth herein; rather, these embodiments are provided so that this disclosure will be thorough and complete, and will fully convey the scope of the invention to those skilled in the art. As used in this specification and the claims, the singular forms "a," "an," and "the" include plural referents unless the context clearly dictates otherwise.

The present invention provides an oxidation catalyst composition adapted for at least partial conversion of gaseous HC and CO emissions, and which is particularly suitable for use as an oxidation catalyst for a lean burn engine, such as a diesel engine. Thus, in some embodiments, the catalyst composition of the invention can be used as a diesel oxidation catalyst (DOC). The catalyst composition comprises a PGM component impregnated on a porous alumina material that comprises a copper-alumina spinel (i.e., CuAl₂O₄) phase. The copper-alumina spinel is believed to work synergistically with the PGM component to enhance CO conversion activity, even where the PGM component has experienced significant sintering to form relatively large PGM crystallites. Indeed, the inventive embodiments described in the experimental section herein have large PGM crystallites (e.g., greater than 50 nm) in close proximity to or in direct contact with the copper-alumina spinel, but still provide superior CO oxidation performance compared to comparable catalysts without the copper-alumina spinel. Despite the conventional wisdom that PGM sintering can greatly reduce oxidation catalyst performance, the inventive catalyst compositions function well notwithstanding the presence of large PGM crystallites. In another inventive embodiment described in the experimental section of this document, small PGM crystallites (e.g., about 1-2 nm) are in close proximity to or in direct contact with the copper-alumina spinel, and thereby provide superior CO oxidation performance compared to comparable catalyst without the copper-alumina spinel.

The presence of the copper-alumina spinel of the catalyst compositions of the invention can be determined by visual inspection of TEM images or by X-ray powder diffraction techniques. In terms of visual inspection, as described in the Experimental, the copper-alumina spinel appears as a dense phase within the catalyst composition, often with either a filamentary or plate-like appearance. The spinel formations are also often proximal to (or in direct contact with) PGM crystallites. For example, in certain embodiments, there is a PGM crystallite having a particle size of at least about 1 nm or at least about 50 nm (where particle size is calculated as the smallest diameter sphere that will completely enclose the particle) proximal to and/or in direct contact with the spinel phase. In certain embodiments, the PGM crystallite proximal to the spinel formation will have a particle size of at least about 60 nm, at least about 70 nm, at least about 80 nm, at least about 90 nm, or at least about 100 nm (e.g., about 50 nm to about 250 nm or about 60 nm to about 120 nm). The distance between the spinel formation and the PGM crystallite can vary, but will often be no more than about 50 nm, no more than about 40 nm, no more than about 30 nm, no more than about 20 nm, no more than about 10 nm, no more than about 1 nm, or no more than about 0 nm.

In certain embodiments, the copper-alumina spinel can be identified by a characteristic X-ray powder diffraction (XRD) pattern. X-ray powder diffraction is a known technique using X-ray radiation directed at a sample (e.g., a powder or microcrystalline material) for structural characterization of the sample. Powder diffraction data are usually presented as a diffractogram in which the diffracted intensity *l* is shown as a function either of the scattering angle 2Θ or as a function of the scattering vector *q*. Identification is performed by comparison of the diffraction pattern to a known standard or to a database such as the International Centre for Diffraction Data's Powder Diffraction File (PDF) or the Cambridge Structural Database (CSD). The fundamental physics upon which the technique is based provides high precision and accuracy in the measurement of interplanar spacings, typically to fractions of an Angstrom, resulting in authoritative identification of specific materials, even distinct polymorphic forms of the same crystalline compound, each of which produces a distinctive diffraction pattern. Both the positions (corresponding to lattice spacings) and the relative intensity of the lines are indicative of a particular phase and material. Equipment useful for measuring such data is known in the art, such as a D8 Advance Powder Diffractometer (Bruker AXS), and any such equipment can be used in the present invention. In certain embodiments, XRD analysis can be carried out using a device incorporating a copper (Cu) anode providing kappa alpha (Kα) radiation.

Thus, the presence of a copper-alumina spinel may be identified and described in relation to the representative graph and/or the approximate X-ray powder diffraction "d-spacing" peaks (i.e., interplanar spacing peaks at °2Θ) obtained in XRD analysis, particularly using Cu Kα radiation. In certain embodiments, the catalyst composition of the invention containing the copper-alumina spinel can be characterized by the XRD pattern set forth in the top line of each of FIGS. 10-12. For example, certain inventive embodiments of the catalyst composition can be characterized as having approximate X-ray powder diffraction "d-spacing" peaks (i.e., interplanar spacing peaks at degrees 2Θ) at about 32 degrees and about 37 degrees. In some embodiments, the interplanar spacing peaks may exhibit a variation (i.e., plus or minus) of up to 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.2, or 0.3 degrees. The presence of the XRD pattern of the copper-alumina spinel in the catalyst composition of the invention can also be characterized as having an interplanar spacing peak between about 30 and about 35 degrees 2Θ and a second peak between about 35 and about 40 degrees 2Θ.

As used herein, "impregnated" or "impregnation" refers to permeation of the catalytic material into the porous structure of the alumina based support material. The oxidation catalyst composition can be prepared using incipient wetness impregnation techniques and coated onto a catalyst substrate using a washcoat technique as set forth more fully below.

### Catalyst Composition

The catalyst composition includes a PGM component impregnated on a porous alumina support that includes a copper component. As used herein, "platinum group metal" or "PGM" refers to platinum group metals or oxides thereof, including platinum (Pt), palladium (Pd), ruthenium (Ru), rhodium (Rh), osmium (Os), iridium (Ir), and mixtures thereof. In certain embodiments, the platinum group metal comprises a combination of platinum and palladium, such as in a weight ratio of about 1 : 10 to about 10: 1, more typically in a platinum to palladium ratio equal to or greater than about 1.5: 1, equal to or greater than about 2: 1, or equal to or greater than about 5:1. The concentrations of PGM component (e.g., Pt, Pd or a combination thereof) are from about 1 wt.% to about 6 wt.% relative to the weight of the porous alumina support material.

Exemplary aluminas include large pore boehmite, gamma-alumina, and delta/theta alumina. Useful commercial aluminas include activated aluminas, such as high bulk density gamma-alumina, low or medium bulk density large pore gamma-alumina, and low bulk density large pore boehmite and gamma-alumina. Alumina support materials, also referred to as "gamma alumina" or "activated alumina," typically exhibit a BET surface area in excess of 60 m²/g, often up to about 200 m²/g or higher. Such activated alumina is usually a mixture of the gamma and delta phases of alumina, but may also contain substantial amounts of eta, kappa and theta alumina phases. "BET surface area" has its usual meaning of referring to the Brunauer, Emmett, Teller method for determining surface area by N₂ adsorption. Desirably, the active alumina has a specific surface area of 60 to 350 m²/g, and typically 90 to 250 m²/g.

The alumina material supporting the PGM component is predominantly alumina (i.e., greater than 50 wt. % of the support material is alumina), but can include other metal oxide components in minor amounts (e.g., other refractory metal oxides such as zirconia, lanthana, or ceria), and will also include a copper component. The copper component will typically be in the form of copper oxide although other copper oxide precursor forms could also be present, such as soluble copper compounds. The amount of copper within the alumina material can vary, but the alumina support will typically contain from about 1 to about 40 wt. % copper (calculated as copper oxide), based on the total weight of the porous alumina material, with advantageous embodiments comprising about 10 to about 25 wt. % copper oxide or about 15 to about 20 wt. % copper oxide.

The weight ratio of the PGM component impregnated on the alumina support to the copper oxide present in the alumina support is typically in the range of about 1 :30 to about 1 : 1 or about 1:20 to about 1 :2.

In certain embodiments, the catalyst composition can be used in powder form or in the form of granules or pellets prepared from a powder. Still further, the catalyst composition can be used in the form of a porous extruded monolith without a separate supporting structure. However, in many advantageous embodiments, the catalyst composition is combined with a support as explained more fully below.

### Substrate

According to one or more embodiments, the substrate for the catalyst composition may be constructed of any material typically used for preparing automotive catalysts and will typically comprise a metal or ceramic honeycomb structure. The substrate typically provides a plurality of wall surfaces upon which a catalyst washcoat composition is applied and adhered, thereby acting as a carrier for the catalyst composition.

Exemplary metallic substrates include those comprising heat resistant metals and metal alloys, such as titanium and stainless steel as well as other alloys in which iron is a substantial or major component. Such alloys may contain one or more of nickel, chromium, and/or aluminum, and the total amount of these metals may advantageously comprise at least 15 wt. % of the alloy, e.g., 10-25 wt. % of chromium, 3-8 wt. % of aluminum, and up to 20 wt. % of nickel. The alloys may also contain small or trace amounts of one or more other metals, such as manganese, copper, vanadium, titanium and the like. The surface or the metallic substrates may be oxidized at high temperatures, e.g., 700°C and higher, to form an oxide layer on the surface of the substrate, improving the corrosion resistance of the alloy and facilitating adhesion of the washcoat layer to the metal surface.

Ceramic materials used to construct the substrate may include any suitable refractory material, e.g., cordierite, mullite, cordierite-a alumina, silicon nitride, zircon mullite, spodumene, alumina-silica magnesia, zircon silicate, sillimanite, magnesium silicates, zircon, petalite, a alumina, aluminosilicates and the like.

Any suitable substrate may be employed, such as a monolithic flow-through substrate having a plurality of fine, parallel gas flow passages extending from an inlet to an outlet face of the substrate such that passages are open to fluid flow. The passages, which are essentially straight paths from the inlet to the outlet, are defined by walls on which the catalytic material is coated as a washcoat so that the gases flowing through the passages contact the catalytic material. The flow passages of the monolithic substrate are thin- walled channels which can be of any suitable cross-sectional shape, such as trapezoidal, rectangular, square, sinusoidal, hexagonal, oval, circular, and the like. Such structures may contain from about 60 to about 1200 or more gas inlet openings (i.e., "cells") per square inch of cross section (cpsi), more usually from about 300 to 600 cpsi. The wall thickness of flow-through substrates can vary, with a typical range being between 0.002 and 0.1 inches. A representative commercially-available flow-through substrate is a cordierite substrate having 400 cpsi and a wall thickness of 6 mil (0.006 inches), or 600 cpsi and a wall thickness of 4 mil (0.004 inches). However, it will be understood that the invention is not limited to a particular substrate type, material, or geometry.

In alternative embodiments, the substrate may be a wall-flow substrate, wherein each passage is blocked at one end of the substrate body with a non-porous plug, with alternate passages blocked at opposite end-faces. This requires that gas entering the front or inlet end of the substrate to flow through the porous walls of the wall -flow substrate in order to exit the outlet end of the substrate. Such monolithic substrates may contain up to about 700 or more cpsi, such as about 100 to 400 cpsi and more typically about 200 to about 300 cpsi. The cross-sectional shape of the cells can vary as described above. Wall-flow substrates typically have a wall thickness between 0.002 and 0.1 inches. A representative commercially available wall- flow substrate is constructed from a porous cordierite, an example of which has 200 cpsi and 10 mil wall thickness or 300 cpsi with 8 mil wall thickness, and wall porosity between 45-65%. Other ceramic materials such as aluminum - titanate, silicon carbide and silicon nitride are also used as wall-flow filter substrates. However, it will be understood that the invention is not limited to a particular substrate type, material, or geometry. Note that where the substrate is a wall-flow substrate, the catalyst composition can permeate into the pore structure of the porous walls (i.e., partially or fully occluding the pore openings) in addition to being disposed on the surface of the walls.

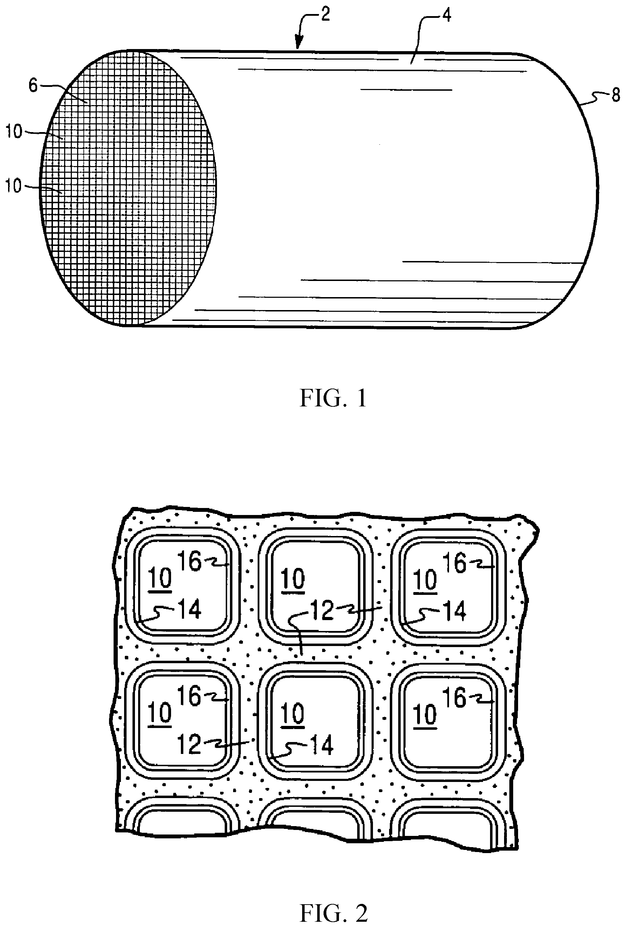

FIGS. 1 and 2 illustrate an exemplary substrate **2** in the form of a flow-through substrate coated with a catalyst composition as described herein. Referring to FIG. 1, the exemplary substrate **2** has a cylindrical shape and a cylindrical outer surface **4,** an upstream end face **6** and a corresponding downstream end face **8,** which is identical to end face **6.** Substrate **2** has a plurality of fine, parallel gas flow passages **10** formed therein. As seen in FIG. 2, flow passages **10** are formed by walls **12** and extend through carrier **2** from upstream end face **6** to downstream end face **8,** the passages **10** being unobstructed so as to permit the flow of a fluid, e.g., a gas stream, longitudinally through carrier **2** via gas flow passages **10** thereof. As more easily seen in FIG. 2, walls **12** are so dimensioned and configured that gas flow passages **10** have a substantially regular polygonal shape. As shown, the catalyst composition can be applied in multiple, distinct layers if desired. In the illustrated embodiment, the catalyst consists of both a discrete bottom layer **14** adhered to the walls **12** of the carrier member and a second discrete top layer **16** coated over the bottom layer **14.** The present invention can be practiced with one or more (e.g., 2, 3, or 4) catalyst layers and is not limited to the illustrated two-layer embodiment. In one embodiment, the invention provides a catalyst article comprising the oxidation catalyst of the invention present in a first layer (either top or bottom layer) combined with a second layer, wherein the second layer can include one or more PGM components impregnated on a support such as alumina and optionally a zeolite. Any number or arrangement of coated layers is possible. The oxidation catalyst of the invention can also be zone-coated on the substrate, meaning the oxidation catalyst is present only in an inlet zone or an outlet zone of the substrate, typically in combination with a second catalyst material of a different composition in the other zone. Any number or arrangement of coated zones is possible.

In describing the quantity of catalytic metal components or other components of the composition, it is convenient to use units of weight of component per unit volume of catalyst substrate. Therefore, the units, grams per cubic inch ("g/in³") and grams per cubic foot ("g/ft³"), are used herein to mean the weight of a component per volume of the substrate, including the volume of void spaces of the substrate. Other units of weight per volume such as g/L are also sometimes used. The total loading of the catalyst composition (including both impregnated PGM and support material) on the catalyst substrate, such as a monolithic flow- through substrate, is typically from about 0.5 to about 6 g/in³, and more typically from about 1 to about 5 g/in³. Total loading of the PGM component without support material (i.e., the Pt or Pd or combination thereof) is typically in the range of about 5 to about 200 g/ft³. Total loading of the copper oxide without support material is typically in the range of about 0.1 to about 2 g/in³. It is noted that these weights per unit volume are typically calculated by weighing the catalyst substrate before and after treatment with the catalyst washcoat composition, and since the treatment process involves drying and calcining the catalyst substrate at high temperature, these weights represent an essentially solvent-free catalyst coating as essentially all of the water of the washcoat slurry has been removed.

### Method of Making Catalyst Composition

Preparation of the PGM-impregnated alumina material typically comprises impregnating the alumina support material in particulate form with a PGM solution, such as one or more of a platinum solution and a palladium solution. Multiple PGM components (e.g., platinum and palladium) can be impregnated at the same time or separately, and can be impregnated on the same support particles or separate support particles. The support particles are typically dry enough to absorb substantially all of the solution to form a moist solid. Aqueous solutions of water soluble compounds or complexes of the PGM component are typically utilized, such as palladium or platinum nitrate, tetraammine palladium or platinum nitrate, or tetraammine palladium or platinum acetate. Solutions containing discrete colloidal particles of PGM may also be used. Following treatment of the support particles with the PGM solution, the particles are dried, such as by heat treating the particles at elevated temperature (e.g., 100-150°C) for a period of time (e.g., 1-3 hours), and then calcined to convert the PGM components to a more catalytically active form. An exemplary calcination process involves heat treatment in air at a temperature of about 400-600°C for about 0.5-3 hours. The above process can be repeated as needed to reach the desired level of PGM impregnation. The resulting material can be stored as a dry powder or in slurry form. Drying and calcination can be accomplished directly on the impregnated powder as described above, or alternatively, after washcoating a slurry prepared from the impregnated powder onto a suitable substrate. In another embodiment, the PGM can be added to the support material after the support material has been applied as a coating to the substrate.

Incorporation of the copper component into the alumina material can be accomplished through various means. In one embodiment, a copper component can be mixed with the alumina support by impregnating the alumina with a copper material using an incipient wetness technique of the type described above with respect to PGM impregnation. For example, an aqueous solution of a water-soluble copper salt (e.g., copper nitrate) could be applied to the alumina material followed by drying and calcination to form copper oxide mixed with the alumina. This impregnation step could occur before or after PGM impregnation of the alumina and can be repeated as necessary to achieve the desired copper loading level. Alternatively, a composite material that comprises an intimate mixture of alumina and copper oxide can be formed by co-precipitation of an aqueous mixture of soluble aluminum and copper salts using techniques known in the art.

A thermal treatment step can be used to form the spinel. The formation of the spinel can occur at various points during production of the catalyst material, such as either before or after PGM impregnation onto the alumina material and even after application of the catalyst material onto a substrate. The thermal treatment step entails treatment of the catalyst composition in an oxidizing environment at elevated temperature for a time sufficient to form the spinel phase. The temperature of the treatment can vary, but will typically exceed about 600°C, such as about 600°C to about 1000°C. The time of the thermal treatment can vary, but will typically be at least about 0.5 hours, such as about 0.5 to about 50 hours. The oxidizing environment or atmosphere can be a gaseous environment containing oxygen, such as air or purified gases with greater or lesser oxygen content. The oxidizing environment optionally may also include water vapor, such as steam in an amount of about 1 to about 30% by volume. In one embodiment of the invention, the spinel phase is formed by thermal treatment at a temperature of 800°C for 20 hours in air containing 10% by volume steam.

### Substrate Coating Process

The above-noted catalyst composition is typically mixed with water to form a slurry for purposes of coating a catalyst substrate, such as a honeycomb -type substrate. In addition to the catalyst particles, the slurry may optionally contain alumina as a binder, hydrocarbon (HC) storage components (e.g., zeolite), water-soluble or water-dispersible stabilizers (e.g., barium acetate), promoters (e.g., lanthanum nitrate), associative thickeners, and/or surfactants (including anionic, cationic, non-ionic or amphoteric surfactants). Milling of the slurry to reduce the support particle size to a range suitable for coating onto a substrate is typically required. In certain embodiments, it is also advantageous to avoid the addition of acids to the slurry in order to avoid the formation of dissociated copper or PGM ions or related metal species that could lead to undesired alloying within the catalyst material. Accordingly, in certain embodiments, the slurry used to coat the catalyst substrate can be substantially or completely acid-free. A typical pH range for the slurry is about 3 to about 7.

Optionally, the slurry may contain one or more hydrocarbon (HC) storage components for the adsorption of hydrocarbons (HC). Any known hydrocarbon storage material can be used, e.g., a microporous material such as a zeolite or zeolite-like material. Preferably, the hydrocarbon storage material is a zeolite. The zeolite can be a natural or synthetic zeolite such as faujasite, chabazite, clinoptilolite, mordenite, silicalite, zeolite X, zeolite Y, ultrastable zeolite Y, ZSM-5 zeolite, offretite, or a beta zeolite. Preferred zeolite adsorbent materials have a high silica to alumina ratio. The zeolites may have a silica/alumina molar ratio of from at least about 10: 1, preferably at least about 50: 1, with useful ranges of from about 10: 1 to 1000: 1, 50: 1 to 500: 1, as well as about 25: 1 to 300: 1. Preferred zeolites include ZSM, Y and beta zeolites. A particularly preferred adsorbent may comprise a beta zeolite of the type disclosed in U.S. Pat. No. 6,171,556, incorporated herein by reference in its entirety. When present, zeolite or other HC storage components are typically used in an amount of about 0.05 g/in³ to about 1 g/in³.

When present, alumina binder is typically used in an amount of about 0.05 g/in³ to about 1 g/in3. The alumina binder can be, for example, boehmite, gamma-alumina, or delta/theta alumina.

The slurry can be milled to enhance mixing of the particles and formation of a homogeneous material. Particle size reduction is often required in order to prepare a slurry with suitable rheology for coating. The milling can be accomplished in a ball mill, continuous mill, or other similar equipment, and the solids content of the slurry may be, e.g., about 20-60 wt. %, more particularly about 30-40 wt. %. In one embodiment, the milled slurry is characterized by a D90 particle size of about 20 to about 30 microns. The D90 is defined as the particle size at which about 90% of the particles have a finer particle size.

The slurry is then coated on the catalyst substrate using a washcoat technique known in the art. As used herein, the term "washcoat" has its usual meaning in the art of a thin, adherent coating of a catalytic material applied to a substrate. In one embodiment, the catalyst substrate is dipped one or more times in the slurry or otherwise coated with the slurry. Thereafter, the coated substrate is dried at an elevated temperature (e.g., 100-150°C) for a period of time (e.g., 0.5-3 hours) and then calcined by heating, e.g., at 400-600° C, typically for about 10 minutes to about 3 hours. Following drying and calcining, the final washcoat coating layer can be viewed as essentially solvent-free.

After calcining, the catalyst loading can be determined through calculation of the difference in coated and uncoated weights of the substrate. As will be apparent to those of skill in the art, the catalyst loading can be modified by altering the slurry rheology or by varying the number of coats. The coating/drying/calcining process can be repeated as needed to build the coating to the desired loading level or thickness. The catalyst composition can be applied as a single layer or in multiple layers. In one embodiment, the catalyst composition is applied in multiple layers with each layer having a different composition.

As noted above, a catalyst article comprising the catalyst composition of the invention exhibits enhanced CO conversion activity, which is believed to be the result of synergistic interaction between the PGM component and the copper-alumina spinel. Accordingly, one or more embodiments of the invention provide a catalyst composition wherein the T₅₀ for CO oxidation of the catalyst composition is lower than the T₅₀ for CO oxidation of a comparable catalyst composition containing the same amount of platinum group metal impregnated on alumina devoid of copper (i.e., devoid of a meaningful amount of copper- containing species such as less than about 0.5 % by weight). In other words, the presence of the copper- alumina spinel phase in the catalysts of the invention improves CO oxidation performance of the PGM containing catalyst. In certain embodiments, the catalyst composition of the invention provides better aged CO oxidation performance (i.e., after the thermal treatment used to produce the spinel phase) than a comparable catalyst with the same PGM loading on alumina devoid of copper, even when the comparable catalyst is fresh rather than aged. In other words, while thermal aging treatments typically reduce CO oxidation performance of conventional PGM-containing oxidation catalysts (at least in part due to PGM sintering), thermal aging of the catalysts of the invention actually improves CO oxidation performance in some embodiments due to formation of the copper-alumina spinel.

The magnitude of the improvement in CO oxidation performance between the catalyst of the invention containing the spinel phase (after thermal aging) and a comparable catalyst with the same PGM loading on an alumina support devoid of copper (after same thermal aging treatment) can vary, but will typically be characterized by a reduction in CO T₅₀ temperature (in degrees Celsius) of at least about 10%, at least about 15% or at least about 20%. T₅₀ CO oxidation testing conditions are set forth in the Experimental.

### Emission Treatment System

The catalyst composition of the present invention is suitable for an emission treatment system that incorporates the catalyst composition described herein. The catalyst composition of the present invention is typically used in an integrated emissions treatment system comprising one or more additional components for the treatment of diesel exhaust gas emissions or the emissions of other lean burn engines. For example, the emission treatment system may further comprise a catalyzed soot filter (CSF) component and/or a selective catalytic reduction (SCR) catalytic component. The oxidation catalyst of the invention is typically located upstream from the soot filter and/or selective catalytic reduction component, although the relative placement of the various components of the emission treatment system can be varied. Alternatively, the CSF could include the oxidation catalyst of the invention. The treatment system can include further components, such as ammonia oxidation materials, additional particulate filtration components, NOₓ storage and/or trapping components, and reductant injectors. The oxidation catalyst may comprise a lean NOx trap (LNT). The preceding list of components is merely illustrative and should not be taken as limiting the scope of the invention.

The CSF may comprise a substrate coated with a washcoat layer containing one or more catalysts for burning trapped soot and or oxidizing exhaust gas stream emissions. In general, the soot burning catalyst can be any known catalyst for combustion of soot. For example, the CSF can be catalyzed with one or more high surface area refractory oxides (e.g., an alumina or a zirconia oxide) and/or an oxidation catalyst (e.g., a ceria-zirconia) for the combustion of unburned hydrocarbons and to some degree particulate matter. The soot burning catalyst can be an oxidation catalyst comprising one or more precious metal catalysts (e.g., platinum, palladium, and/or rhodium).

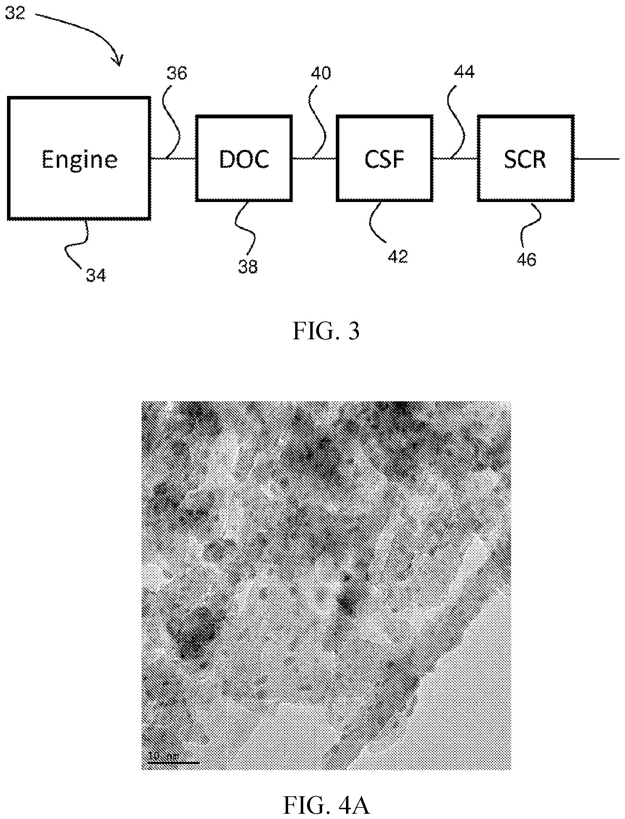

One exemplary emissions treatment system is illustrated in FIG. 3, which depicts a schematic representation of an emission treatment system **32.** As shown, an exhaust gas stream containing gaseous pollutants and particulate matter is conveyed via exhaust pipe **36** from an engine **34** (e.g., a diesel engine, lean GDI engine, or other lean burn engine) to a diesel oxidation catalyst (DOC) **38,** which is coated with the catalyst composition of the present invention. In the DOC **38,** unburned gaseous and non-volatile hydrocarbons (i.e., the SOF) and carbon monoxide are largely combusted to form carbon dioxide and water. In addition, a proportion of the NO of the NOₓ component may be oxidized to NO₂ in the DOC. The exhaust stream is next conveyed via exhaust pipe **40** to a catalyzed soot filter (CSF) **42,** which traps particulate matter present within the exhaust gas stream. The CSF **42** is optionally catalyzed for passive or active soot regeneration. After removal of particulate matter, via CSF **42,** the exhaust gas stream is conveyed via exhaust pipe **44** to a downstream selective catalytic reduction (SCR) component **46** for the further treatment and/or conversion of NOₓ.

The DOC **38** may be placed in a close-coupled position. Close-coupled catalysts are placed close to an engine to enable them to reach reaction temperatures as soon as possible. In specific embodiments, the close-coupled catalyst is placed within three feet, more specifically, within one foot of the engine, and even more specifically, less than six inches from the engine. Close-coupled catalysts are often attached directly to the exhaust gas manifold. Due to their close proximity to the engine, close-coupled catalysts are preferably stable at high temperatures.

### EXPERIMENTAL

Aspects of the present invention are more fully illustrated by the following examples, which are set forth to illustrate certain aspects of the present invention and are not to be construed as limiting thereof.

Samples were prepared by incipient wetness impregnation of an amine-stabilized Pt salt solution onto either a composite powder comprising a mixture of 83 wt. % alumina and 17 wt.% copper oxide and having a BET surface area of about 200 m²/g and a pore volume of about 0.9 cm /g (Inventive Sample 1) or an alumina powder having a BET surface area of about 150 m²/g and a pore volume of about 0.8 cm /g (Comparative Sample 2), followed by drying and calcination at 450°C. Compositions of the samples are summarized in Table 1 below.

Comparative Sample 3 was prepared by incipient wetness impregnation of CuN0₃ solution onto the alumina powder used in the preparation of Comparative Sample 2, followed by drying and calcination at 450°C. Comparative Sample 3 was free of PGM. Inventive Sample 4 was prepared by incipient wetness impregnation of CuN0₃ solution onto the alumina powder used in the preparation of Comparative Sample 3, followed by drying and calcination at 450°C. The calcined powder was then impregnated with an amine- stabilized Pt salt solution, dried, and calcined at 450°C. Subsequently, the powder was impregnated with Pd(N0₃)₂ solution, dried and calcined at 450°C.

Comparative Sample 5 was prepared similarly to Inventive Sample 4, except that the alumina powder was not impregnated with copper nitrate.

Inventive Sample 6 was prepared similarly to Comparative Sample 5, except that the composite powder used in the preparation of Inventive Sample 1 comprising a mixture of 83 wt. % alumina and 17 wt.% copper oxide was used instead of alumina powder. Concentrations of Pt and Pd in Sample 6 were approximately half of the concentrations used in Samples 4 and 5.

Inventive Sample 7 was prepared by impregnation of a solution comprising Pt nanoparticles onto the composite powder used in the preparation of Inventive Sample 1 comprising a mixture of 83 wt. % alumina and 17 wt.% copper oxide that was pre-calcined for 2 hours at 900°C in air with 10% by volume steam. The pre-calcined powder had a BET surface area of about 100 m²/g and a pore volume of about 0.75 cm /g. The impregnation of Pt was followed by drying and calcination of the powder at 450°C.

Comparative Sample 8 was prepared similarly to Inventive Sample 7, except that the composite alumina-copper oxide powder was not pre-calcined prior to impregnation with the Pt precursor solution (i.e., was identical to the composite powder used in the preparation of Inventive Sample 1). The compositions of all inventive and comparative samples are summarized in Table 1.

Prior to catalytic activity evaluation, the catalyst samples were optionally thermally aged for 20 hours at 800°C in air containing 10% by volume steam. Catalytic activities of the samples were characterized by conducting light-off tests using a laboratory flow reactor commonly known in the art. Light-off test conditions are summarized below:

### Test gas composition

| | | |
|---|---|---|
| CO: | 700 ppm | |
| NO: | 70 ppm | |
| O₂: | 10 % | |
| H₂O (steam): | 5 % | |
| CO₂: | 10 % | |
| Hydrocarbons: | 80 ppm propylene on C₁ basis | |
| Air: | balance | |
| GHSV: | | 45,000 h⁻¹ |
| Temperature interval: | | 125°C - 300°C |

Experimental test results for the above-described catalysts are summarized in Table 1 below. CO oxidation activities are represented either in terms of the temperatures of 50% CO conversion (CO T₅₀), or in terms of the CO conversions at the catalyst temperature of 125°C (Xco_{@125C}). In the light-off tests the temperature of the catalyst was sequentially raised from 125°C to 300°C, and the CO concentration was measured using an Infrared (IR) analyzer. CO conversion was calculated based on the difference between the inlet and outlet CO concentrations.

**Table 1. Compositions and CO oxidation activities of the samples**

| Sample # | PGM Content (wt. %) | Support Composition (wt. %) | CO T₅₀ (°C) | | X_{CO@125C} | |
|---|---|---|---|---|---|---|
| | | | Fresh | Aged | Fresh | Aged |
| 1 | 2% Pt | 17% CuO + 83% Al₂O₃ | 172 | 148 | 1 | 14 |
| 2 | 2% Pt | 100% Al₂O₃ | 158 | 184 | 6 | 1 |
| 3 | 0 | 15% CuO + 85% Al₂O₃ | 268 | 298 | | |
| 4 | 1.6% Pt+0.8% Pd | 15% CuO + 85% Al₂O₃ | | 138 | | 27 |
| 5 | 1.6% Pt+0.8% Pd | 100% Al₂O₃ | | 160 | | 1 |
| 6 | 0.8% Pt+0.4% Pd | 17% CuO + 83% Al₂O₃ | | 156 | | 14 |
| 7 | 1% Pt | 17% CuO + 83% Al₂O₃ (pre- calcined 2h@900°C in 10% steam/air | <125 | | 94 | |
| 8 | 1% Pt | 17% CuO + 83% Al₂O₃ | <125 | | 63 | |

The results set forth in Table 1 are highly unusual. For example, the aged CO oxidation activity of Sample 1 comprising Pt, CuO and Al₂O₃ is substantially higher than the activity of the same catalyst before aging (i.e., fresh). This is unexpected as aging of a catalyst material containing a PGM component will usually result in sintering of the PGM component into larger particles and a corresponding reduction in the catalyst activity (i.e., higher light-off temperature). Comparative Sample 2 (without the addition of Cu) shows the typical decline in activity after aging. Inventive Sample 1, after aging, even outperforms the catalyst performance of Comparative Sample 2 before aging, and greatly outperforms the performance of Comparative Sample 2 after aging.

The data confirm that the unusual aged performance of Inventive Sample 1 is not the result of the presence of CuO or the result of a synergistic effect between CuO and the PGM component. Comparison of the CO T₅₀ data for Inventive Sample 1 and Comparative Sample 2 clearly shows that addition of copper oxide decreases the catalytic activity for the fresh samples before aging, when the spinel is not present. Poor activity of Comparative Sample 3 comprising 15% CuO impregnated on alumina without PGM confirms that addition of copper alone does not increase catalytic activity.

The aged performance of Sample 4 comprising Pt, Pd, CuO and Al₂O₃ is significantly better than the aged performance of Comparative Sample 5. Even the aged performance of Sample 6 is better than the aged performance of Sample 5, despite having half the catalyst precious metal content. Compared to Samples 1 and 2, Samples 7 and 8 are very active before aging despite having only 1 wt. % Pt. This is due to the use of a different Pt precursor comprising Pt nanoparticles for the preparation of Samples 7 and 8. However, Sample 7 with the composite powder comprising a mixture of 83 wt. % alumina and 17 wt.% copper oxide that was pre-calcined 2 hours at 900°C in air containing 10% steam was more active than Comparative Sample 8 comprising the same composite powder that was not pre-calcined (i.e., CO conversion measured at 125°C was 94% for Sample 7 vs. 63% for Sample 8). For all inventive samples, the presence of copper and precious metal is required for high catalytic activity. However, as discussed in more detail below, in addition to the presence of both Cu and PGM, the formation of CuAl₂O₄ spinel in close proximity to the PGM is also advantageous.

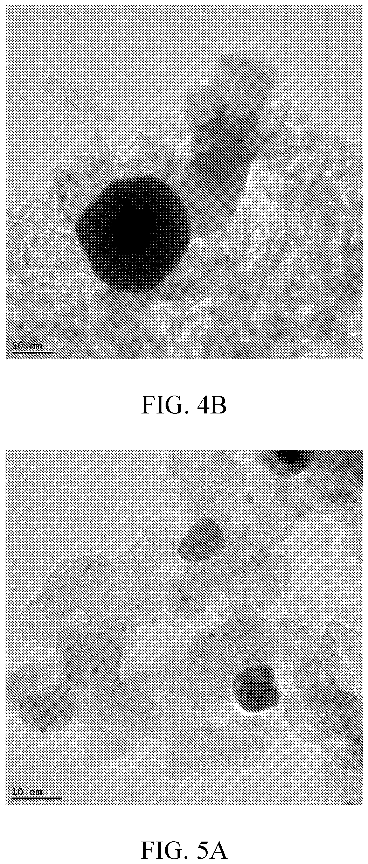

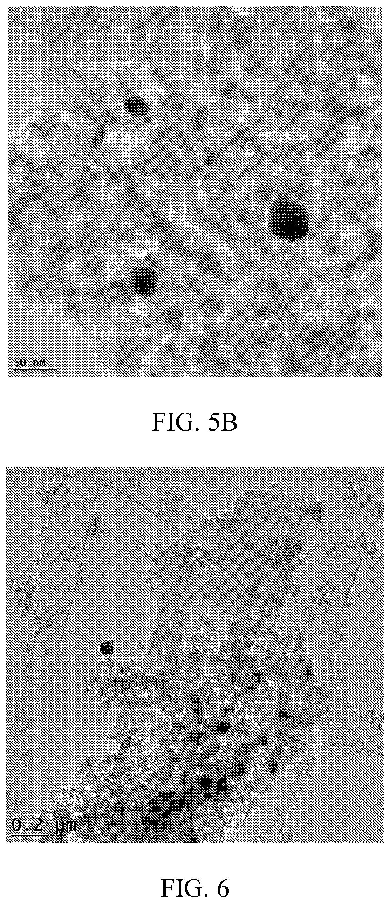

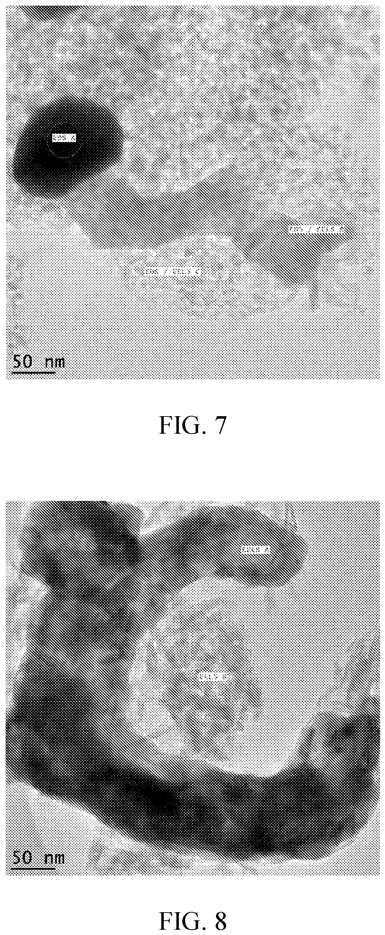

Transmission Electron Spectroscopy (TEM) analysis was performed for the above listed samples. This analysis found that unusual mushroom-like structures are formed in the aged Pt/Cu/Alumina (Sample 1) and PtPd/Cu/Alumina (Sample 6) catalysts of the invention. FIG. 4A is an image of fresh Sample 1, showing small Pt crystallites (dark spots having an average particle size in the range of about 1-3 nm) on the Cu-Alumina support. Dispersion of Cu on the support is very high, and individual Cu-containing particles are not visible by TEM. In contrast, FIG. 4B, which is an image of Sample 1 after aging, shows large Pt crystallites (dark spots having an average particle size of about 100 nm) proximal to or in direct contact with a new filamentary dense phase, which is believed to be copper-alumina spinel CuAl₂O₄. The increase in Pt crystallite size was expected due to the thermal sintering properties of Pt known in the art. However, the formation of a dense CuAl₂O₄ phase proximal to or in direct contact with the large Pt crystallites was not expected or known in the art. Similar structures are not visible in TEM images of Comparative Sample 2 without copper. FIG. 5 A is an image of Comparative Sample 2 before aging, and small (about 1-3 nm) Pt crystallites are shown, along with some larger ones (about 5-10 nm) on the alumina support. FIG. 5B is an image of Comparative Sample 2 after aging and shows the expected increase in PGM particle size, with most Pt crystallites being in the range of about 20-50 nm (with some about 100 nm in size). In this case, however, no spinel phase is associated with the larger particles, since no copper is present in this formulation. The TEM images of Inventive Samples 4 and 6 after aging (shown in FIGS. 6 and 7, respectively) are similar to FIG. 4B, illustrating larger PGM crystallites (e.g., PtPd crystallites in the range of about 50 to about 200 nm) proximal to or in direct contact with a filamentary (FIG. 7) or plate-like (FIG. 6) dense phase believed to be copper-alumina spinel (CuAl₂O₄).

In the aged Pt/Cu/Alumina Sample 1, small Pt particles do not exist, only large ones, which on a volume basis are about 100,000 times larger than those in the fresh sample. Despite this, the CO activity strongly improves after aging as noted in Table 1. Although not bound by a particular theory of operation, it is believed that the observed activity improvement is directly related to the synthesis of a new phase - copper-alumina spinel CuAl₂O₄ - in the course of high temperature aging. The spinel is in close contact with the PGM component and functions to significantly enhance CO oxidation performance of the catalytic PGM/Cu/alumina system.

The spinel that is formed in the PGM/Cu/Al₂O₃ system does not necessarily need to have the filamentary morphology observed in the aged Samples 1 and 6. The most active aged sample of those shown in Table 1 - Sample 4 -also comprises spinel that was synthesized in the course of aging. However, the spinel in this sample has a distinctly different morphology, flat plate-like formations, as seen in FIG. 6. The same is true for Sample 7 (FIG. 8), where large dense formations, apparently representing the spinel that was formed in the course of pre-calcining the composite powder comprising the mixture of 83 wt. % alumina and 17 wt.% copper oxide, are clearly seen and are in a close proximity to and/or in direct contact with small (about 1-2 nm) Pt particles (confirmed by Energy Dispersive Spectroscopy (EDS) analysis). In contrast, Sample 8 (TEM image in FIG. 9), prepared with the same composite powder comprising the mixture of 83 wt. % alumina and 17 wt.% copper oxide, but not pre-calcined, does not have large dense formations believed to be the copper-alumina spinel, but does have Pt particles of the same size as those in the Sample 7 (about 1-2 nm). Despite the similar Pt crystallite sizes in Samples 7 and 8, higher CO conversion was observed for Inventive Sample 7 due to the close proximity of Pt crystallites and the dense CuAl₂O₄ phase.

Whether the precious metal crystallite size is very large as shown in Figure 7 or very small as shown in Figure 8, and without wishing to be limited by theory, it is believed that an inventive aspect of this disclosure is the proximity of these crystallites to the dense CuAl₂O₄ spinel phase. In the case of catalysts comprising very large precious metal crystallites in close proximity to or in direct contact with the dense CuAl₂O₄ phase, CO oxidation performance is unexpectedly high.

Note that the presence of the copper-alumina spinel CuAl₂O₄ is also confirmed by XRD analysis of the aged Samples 1, 4, and 6. The X-ray powder diffraction patterns for these materials were obtained using a D8 Advance Powder Diffractometer (Bruker AXS). Cu Kα radiation was used for data collection. Generator settings of 40 kV / 40 mA were used. The beam was narrowed using a collimator for line focus (Seller Slit, 2.5°) and a motorized divergence slit (0.17°). A measurement range of 5-70° 2Θ was used with a step size of 0.02° and a count time of 0.2 seconds per step. The samples were prepared in a round sample holder with a 22 mm wide cavity. The phases present in each sample were identified by search and match of the data available from International Centre for Diffraction Data (ICDD, Version 2015).

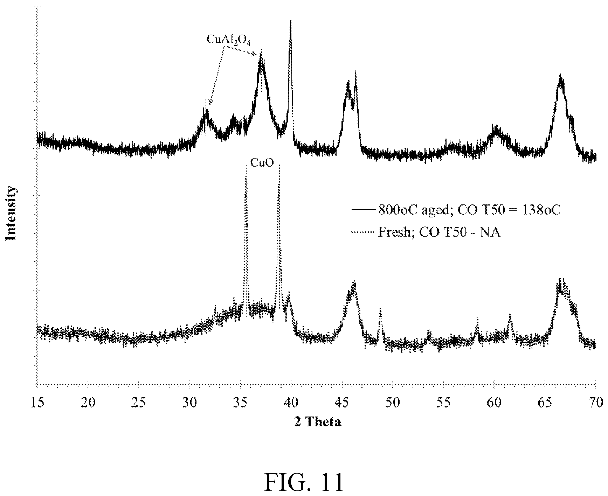

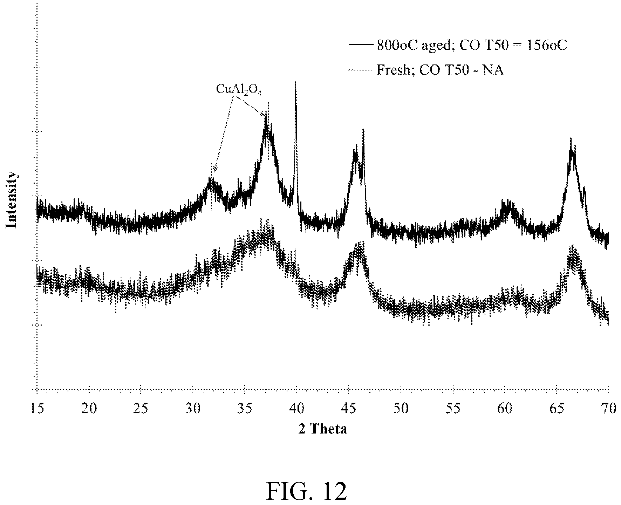

The XRD results before and after aging are shown in FIGS 10-12. The XRD pattern for Sample 1 is set forth in FIG. 10. As shown, Sample 1 after aging (top solid line with spinel phase labeled) shows peaks associated with the spinel phase, which are notably absent from the fresh Sample 1 (lower dotted line). FIGS. 11 and 12 show a similar pattern for Samples 4 and 6, respectively, with only the aged samples (top solid line with spinel phase labeled) showing peaks associated with the spinel phase.

## Claims

1. An oxidation catalyst composition, the composition comprising at least one platinum group metal impregnated onto a porous alumina material, wherein the porous alumina material comprises a copper-alumina spinel phase,
wherein at least one portion of the copper-alumina spinel phase is proximal to, or in direct contact with, one or more of the following:
at least one platinum group metal crystallite;
at least one platinum group metal crystallite having a crystallite size of about 1 nm or greater;
at least one platinum group metal crystallite having a crystallite size of about 50 nm or greater; **characterized in that**
the concentration of at least one platinum group metal is about 1 wt.% to about 6 wt.% relative to the weight of the porous alumina material.

2. The oxidation catalyst composition of claim 1, wherein one or more of the following applies:
the at least one portion of the copper-alumina spinel phase is within about 50 nm of the at least one platinum group metal crystallite;
the porous alumina material comprises copper, calculated as copper oxide, in an amount of about 1 to about 40% by weight, based on the total weight of the porous alumina material;
the platinum group metal is platinum, palladium, or a combination thereof.

3. The oxidation catalyst composition of claim 1, wherein the oxidation catalyst composition is **characterized by** X-ray powder diffraction interplanar spacing peaks comprising a peak between about 30 and about 35 degrees 2Θ and a peak between about 35 degrees and about 40 degrees 2Θ.

4. A catalyst article, comprising a catalyst substrate having a plurality of channels adapted for gas flow, the catalyst substrate having a catalyst coating disposed thereon, wherein the catalyst coating comprises the oxidation catalyst composition of any one of claims 1 to 3.

5. The catalyst article of claim 4, wherein the catalyst substrate is a catalyzed soot filter.

6. The catalyst article of claim 4, wherein the oxidation catalyst composition is disposed in a first layer on the catalyst substrate, and wherein the catalyst article further comprises a second layer comprising at least one platinum group metal impregnated on a refractory metal oxide support optionally in combination with a zeolite; or
wherein the catalyst article comprises an inlet zone proximal to an inlet face of the catalyst article and an outlet zone proximal to an outlet face of the catalyst article, wherein the oxidation catalyst composition is disposed only in either the inlet zone or the outlet zone.

7. A method of preparing an oxidation catalyst composition comprising a copper-alumina spinel phase, comprising:
receiving a porous alumina material comprising predominantly alumina mixed with copper oxide;
impregnating the porous alumina material with one or more water soluble salts of a platinum group metal;
drying and calcining the porous alumina material after said impregnating step to form a catalyst composition; and
thermally treating the porous alumina material to form a copper-alumina spinel phase either before or after said impregnating step,
wherein said thermally treating step causes sintering of platinum group metal crystallites such that at least one portion of the copper-alumina spinel phase is proximal to, or in direct contact with, at least one platinum group metal crystallite having a crystallite size of about 1 nm or greater; and
optionally, the at least one portion of the copper-alumina spinel phase is within about 50 nm of the at least one platinum group metal crystallite; and
wherein the concentration of at least one platinum group metal is about 1 wt.% to about 6 wt.% relative to the weight of the porous alumina material upon which the platinum group metal is impregnated.

8. The method of claim 7, further comprising forming a washcoat slurry of the catalyst composition; coating the washcoat slurry onto a catalyst substrate comprising a plurality of channels adapted for gas flow to form a catalyst article, and calcining the catalyst article, wherein said thermally treating step comprises thermally treating the resulting catalyst article to form the copper-alumina spinel phase.

9. The method of claim 7, wherein one or more of the following applies:
the porous alumina material comprises copper oxide in an amount of about 1 to about 40% by weight, based on the total weight of the porous alumina material;
the platinum group metal comprises platinum, palladium, or a combination thereof.

10. The method of claim 7, wherein the step of thermally treating the catalyst composition comprises heating the catalyst composition at a temperature of at least 600°C in an oxidizing environment.

11. The method of claim 7, wherein the porous alumina material comprising predominantly alumina mixed with copper oxide is formed by a method comprising either co-precipitating a mixture of a soluble aluminum salt and a soluble copper salt or impregnating a copper salt onto an alumina support.

## Patentansprüche

1. Oxidationskatalysatorzusammensetzung, die Zusammensetzung umfassend mindestens ein Platingruppenmetall, das auf ein poröses Aluminiumoxidmaterial imprägniert ist, wobei das poröse Aluminiumoxidmaterial eine Kupfer-Aluminiumoxid-Spinell-Phase umfasst,
wobei mindestens ein Abschnitt der Kupfer-Aluminiumoxid-Spinell-Phase proximal zu oder in direktem Kontakt mit einem oder mehreren der Folgenden ist:
mindestens einem Platingruppenmetallkristallit;
mindestens einem Platingruppenmetallkristallit, der eine Kristallitgröße von etwa 1 nm oder mehr aufweist;
mindestens einem Platingruppenmetallkristallit, der eine Kristallitgröße von etwa 50 nm oder mehr aufweist; **dadurch gekennzeichnet, dass**
die Konzentration mindestens eines Platingruppenmetalls etwa 1 Gew.-% bis etwa 6 Gew.-% beträgt, relativ zu dem Gewicht des porösen Aluminiumoxidmaterials.

2. Oxidationskatalysatorzusammensetzung nach Anspruch 1, wobei eines oder mehrere der Folgenden gilt:
der mindestens eine Abschnitt der Kupfer-Aluminiumoxid-Spinell-Phase ist innerhalb von etwa 50 nm des mindestens einen Platingruppenmetallkristallits;
das poröse Aluminiumoxidmaterial umfasst Kupfer, berechnet als Kupferoxid, in einer Menge von etwa 1 bis etwa 40 Gew.-%, basierend auf dem Gesamtgewicht des porösen Aluminiumoxidmaterials;
das Platingruppenmetall ist Platin, Palladium oder eine Kombination davon.

3. Oxidationskatalysatorzusammensetzung nach Anspruch 1, wobei die Oxidationskatalysatorzusammensetzung **gekennzeichnet ist durch** Röntgenpulverbeugung-Netzebenenabstandspeaks, umfassend einen Peak zwischen etwa 30 und etwa 35 Grad 2Θ und einen Peak zwischen etwa 35 Grad und etwa 40 Grad 2Θ.

4. Katalysatorartikel, umfassend ein Katalysatorsubstrat, das eine Vielzahl von Kanälen aufweist, die für einen Gasfluss angepasst sind, wobei das Katalysatorsubstrat eine darauf angeordnete Katalysatorbeschichtung aufweist, wobei die Katalysatorbeschichtung die Oxidationskatalysatorzusammensetzung nach einem der Ansprüche 1 bis 3 umfasst.

5. Katalysatorartikel nach Anspruch 4, wobei das Katalysatorsubstrat ein katalysierter Rußfilter ist.

6. Katalysatorartikel nach Anspruch 4, wobei die Oxidationskatalysatorzusammensetzung in einer ersten Schicht auf dem Katalysatorsubstrat angeordnet ist und wobei der Katalysatorartikel ferner eine zweite Schicht umfasst, umfassend mindestens ein Platingruppenmetall, das auf einem feuerfesten Metalloxidträger optional in Kombination mit einem Zeolith imprägniert ist; oder
wobei der Katalysatorartikel eine Einlasszone proximal zu einer Einlassfläche des Katalysatorartikels und eine Auslasszone proximal zu einer Auslassfläche des Katalysatorartikels umfasst, wobei die Oxidationskatalysatorzusammensetzung nur in entweder der Einlasszone oder der Auslasszone angeordnet ist.

7. Verfahren zum Herstellen einer Oxidationskatalysatorzusammensetzung, umfassend eine Kupfer-Aluminiumoxid-Spinell-Phase, umfassend:
Aufnehmen eines porösen Aluminiumoxidmaterials, umfassend überwiegend Aluminiumoxid, das mit Kupferoxid gemischt ist;
Imprägnieren des porösen Aluminiumoxidmaterials mit einem oder mehreren wasserlöslichen Salzen eines Platingruppenmetalls;
Trocknen und Kalzinieren des porösen Aluminiumoxidmaterials nach dem Imprägnierungsschritt, um eine Katalysatorzusammensetzung auszubilden; und
thermisches Behandeln des porösen Aluminiumoxidmaterials, um eine Kupfer-Aluminiumoxid-Spinell-Phase entweder vor oder nach dem Imprägnierungsschritt auszubilden,
wobei der Schritt des thermischen Behandelns ein Sintern von Platingruppenmetallkristalliten derart bewirkt, dass mindestens ein Abschnitt der Kupfer-Aluminiumoxid-Spinell-Phase proximal zu oder in direktem Kontakt mit mindestens einem Platingruppenmetallkristallit ist, der eine Kristallitgröße von etwa 1 nm oder mehr aufweist; und
optional der mindestens eine Abschnitt der Kupfer-Aluminiumoxid-Spinell-Phase innerhalb von etwa 50 nm des mindestens einen Platingruppenmetallkristallits ist; und
wobei die Konzentration von mindestens einem Platingruppenmetall etwa 1 Gew.-% bis etwa 6 Gew.-% beträgt, relativ zu dem Gewicht des porösen Aluminiumoxidmaterials, auf dem das Platingruppenmetall imprägniert ist.

8. Verfahren nach Anspruch 7, ferner umfassend das Ausbilden einer Washcoat-Aufschlämmung der Katalysatorzusammensetzung; Beschichten der Washcoat-Aufschlämmung auf ein Katalysatorsubstrat, umfassend eine Vielzahl von Kanälen, die für den Gasfluss angepasst sind, um einen Katalysatorartikel auszubilden, und Kalzinieren des Katalysatorartikels, wobei der Schritt des thermischen Behandelns das thermische Behandeln des resultierenden Katalysatorartikels umfasst, um die Kupfer-Aluminiumoxid-Spinell-Phase auszubilden.

9. Verfahren nach Anspruch 7, wobei eines oder mehrere der Folgenden gilt:
das poröse Aluminiumoxid umfasst Kupferoxid in einer Menge von etwa 1 bis etwa 40 Gew.-%, basierend auf dem Gesamtgewicht des porösen Aluminiumoxidmaterials;
das Platingruppenmetall umfasst Platin, Palladium oder eine Kombination davon.

10. Verfahren nach Anspruch 7, wobei der Schritt des thermischen Behandelns der Katalysatorzusammensetzung ein Erhitzen der Katalysatorzusammensetzung bei einer Temperatur von mindestens 600 °C in einer oxidierenden Umgebung umfasst.

11. Verfahren nach Anspruch 7, wobei das poröse Aluminiumoxidmaterial, umfassend überwiegend Aluminiumoxid, das mit Kupferoxid gemischt ist, durch ein Verfahren ausgebildet wird, umfassend entweder ein Co-Ausfällen einer Mischung eines löslichen Aluminiumsalzes und eines löslichen Kupfersalzes oder das Imprägnieren eines Kupfersalzes auf einen Aluminiumoxidträger.

## Revendications

1. Composition de catalyseur d'oxydation, la composition comprenant au moins un métal du groupe du platine imprégné sur un matériau d'alumine poreuse, dans laquelle le matériau d'alumine poreuse comprend une phase spinelle de cuivre-alumine,
dans laquelle au moins une partie de la phase spinelle de cuivre-alumine est à proximité de, ou en contact direct avec, un ou plusieurs des éléments suivants :
au moins un cristallite métallique du groupe du platine ;
au moins un cristallite métallique du groupe du platine ayant une taille de cristallite d'environ 1 nm ou plus ;
au moins un cristallite métallique du groupe du platine ayant une taille de cristallite d'environ 50 nm ou plus ; **caractérisée en ce que**
la concentration d'au moins un métal du groupe du platine est d'environ 1 % en poids à environ 6 % en poids par rapport au poids du matériau d'alumine poreuse.

2. Composition de catalyseur d'oxydation selon la revendication 1, dans laquelle un ou plusieurs des éléments suivants s'appliquent :
l'au moins une partie de la phase spinelle de cuivre-alumine est comprise dans environ 50 nm de l'au moins un cristallite métallique du groupe du platine ;
le matériau d'alumine poreuse comprend du cuivre, calculé en tant qu'oxyde de cuivre, dans une quantité d'environ 1 à environ 40 % en poids, sur la base du poids total du matériau d'alumine poreuse ;
le métal du groupe du platine est du platine, du palladium, ou une combinaison de ceux-ci.

3. Composition de catalyseur d'oxydation selon la revendication 1, dans laquelle la composition de catalyseur d'oxydation est **caractérisée par** des pics d'espacement interplanaire par diffraction des rayons X sur poudres comprenant un pic entre environ 30 et environ 35 degrés 2Θ et un pic entre environ 35 degrés et environ 40 degrés 2Θ.

4. Article de catalyseur, comprenant un substrat de catalyseur ayant une pluralité de canaux adaptés pour un débit de gaz, le substrat de catalyseur ayant un revêtement de catalyseur disposé sur celui-ci, dans lequel le revêtement de catalyseur comprend la composition de catalyseur d'oxydation selon l'une quelconque des revendications 1 à 3.

5. Article de catalyseur selon la revendication 4, dans lequel le substrat de catalyseur est un filtre à suie catalysé.

6. Article de catalyseur selon la revendication 4, dans lequel la composition de catalyseur d'oxydation est disposée dans une première couche sur le substrat de catalyseur, et dans lequel l'article de catalyseur comprend en outre une seconde couche comprenant au moins un métal du groupe du platine imprégné sur un support d'oxyde métallique réfractaire éventuellement en combinaison avec une zéolite ; ou
dans lequel l'article de catalyseur comprend une zone d'entrée à proximité d'une face d'entrée de l'article de catalyseur et une zone de sortie à proximité d'une face de sortie de l'article de catalyseur, dans lequel la composition de catalyseur d'oxydation est disposée uniquement soit dans la zone d'entrée soit dans la zone de sortie.

7. Procédé de préparation d'une composition de catalyseur d'oxydation comprenant une phase spinelle de cuivre-alumine, comprenant :
la réception d'un matériau d'alumine poreuse comprenant majoritairement de l'alumine mélangée à de l'oxyde de cuivre ;
l'imprégnation du matériau d'alumine poreuse avec un ou plusieurs sels hydrosolubles d'un métal du groupe du platine ;
le séchage et la calcination du matériau d'alumine poreuse après ladite étape d'imprégnation pour former une composition de catalyseur ; et
le traitement thermique du matériau d'alumine poreuse pour former une phase de spinelle de cuivre-alumine soit avant soit après ladite étape d'imprégnation,
dans lequel ladite étape de traitement thermique provoque un frittage de cristallites métalliques du groupe du platine de telle sorte qu'au moins une partie de la phase spinelle de cuivre-alumine est à proximité de, ou en contact direct avec, au moins un cristallite métallique du groupe du platine ayant une taille de cristallite d'environ 1 nm ou plus ; et
éventuellement, l'au moins une partie de la phase spinelle de cuivre-alumine est comprise dans environ 50 nm de l'au moins un cristallite métallique du groupe du platine ; et
dans lequel la concentration d'au moins un métal du groupe du platine est d'environ 1 % en poids à environ 6 % en poids par rapport au poids du matériau d'alumine poreuse sur lequel le métal du groupe du platine est imprégné.

8. Procédé selon la revendication 7, comprenant en outre la formation d'une bouillie d'imprégnation de la composition de catalyseur ; le revêtement de la bouillie d'imprégnation sur un substrat de catalyseur comprenant une pluralité de canaux adaptés à un débit de gaz pour former un article de catalyseur, et la calcination de l'article de catalyseur, dans lequel ladite étape de traitement thermique comprend le traitement thermique de l'article de catalyseur qui en résulte pour former la phase spinelle de cuivre-alumine.

9. Procédé selon la revendication 7, dans lequel un ou plusieurs des éléments suivants s'appliquent :
le matériau d'alumine poreuse comprend de l'oxyde de cuivre dans une quantité d'environ 1 à environ 40 % en poids, sur la base du poids total du matériau d'alumine poreuse ;
le métal du groupe du platine comprend du platine, du palladium, ou une combinaison de ceux-ci.

10. Procédé selon la revendication 7, dans lequel l'étape de traitement thermique de la composition de catalyseur comprend le chauffage de la composition de catalyseur à une température d'au moins 600 °C dans un environnement oxydant.

11. Procédé selon la revendication 7, dans lequel le matériau d'alumine poreuse comprenant majoritairement de l'alumine mélangée à de l'oxyde de cuivre est formé par un procédé comprenant soit la co-précipitation d'un mélange d'un sel d'aluminium soluble et d'un sel de cuivre soluble soit l'imprégnation d'un sel de cuivre sur un support d'alumine.
